(19) Europäisches Patentamt
European Patent Office
Office européen des brevets

(11) EP 2 782 308 A1

(12) EUROPEAN PATENT APPLICATION
published in accordance with Art. 153(4) EPC

(43) Date of publication:
24.09.2014 Bulletin 2014/39

(51) Int Cl.:
H04L 29/06 (2006.01)    H04L 29/08 (2006.01)
G06F 9/445 (2006.01)

(21) Application number: 12853374.2

(22) Date of filing: 15.03.2012

(86) International application number:
PCT/CN2012/072392

(87) International publication number:
WO 2013/078797 (06.06.2013 Gazette 2013/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.11.2011 CN 201110386788

(71) Applicant: ZTE Corporation
Shenzhen, Guangdong 518057 (CN)

(72) Inventors:
• CHEN, Lu
  Shenzhen
  Guangdong 518057 (CN)
• ZHONG, Sheng
  Shenzhen
  Guangdong 518057 (CN)

(74) Representative: Fassio, Valeria et al
Jacobacci & Partners S.p.A.
Corso Emilia, 8
10152 Torino (IT)

(54) NETWORK FILE TRANSMISSION METHOD AND SYSTEM

(57) Disclosed are a method and system for transmitting a network file. The method includes: a client sends to a server a network file request message carrying a first network file identifier, wherein the network file request message is used by the client to request to obtain the current content in the network file from the server, and the first network file identifier is used for indicating the content in the network file obtained by the client; the client receives a differential file from the server, wherein the differential file stores the difference between the current content in the network file and the content in the network file obtained by the client; and the client combines the differential file with the content in the network file obtained by the client to obtain the current content in the network file. The present invention reduces the transmission traffic and shortens the transmission time.

a client sends to a server a network file request message carrying a first network file identifier, wherein the network file request message is used by the client to request to obtain current content in the network file from the server, and the first network file identifier is used for indicating content in the network file obtained by the client — S102

the client receives a differential file from the server, wherein the differential file stores a difference between the current content in the network file and the content in the network file obtained by the client — S104

the client combines the differential file with the content in the network file obtained by the client to obtain the current content in the network file — S106

**FIG. 1**

**Description**

**Technical Field**

The present invention relates to the field of communications, in particular to a method and system for transmitting a network file.

**Background**

At present, there are two types of network files being transmitted on networks. One type is plaintext files, such as Hypertext Markup Language (HTML for short), extensible Markup Language (XML for short), JavaScript Object Notation (JSON short), etc.; and the other type is binary files, such as Joint Photographic Experts Group (JPEG or JPG for short), etc. The entropy value of a plaintext file is generally small (i.e. the plaintext file stores less information with more storage space).

In the related art, full-text transmission is usually adopted for network files. However, for the same Uniform Resource Locator (URL for short) address, the content in a file changes little in a short time; hence, full-text transmission will result in much redundant information being transmitted to the client, increasing the transmission traffic and the transmission time.

**Summary**

The present invention provides a method and system for transmitting a network file to solve at least the problem of full-text transmission in related art that much redundant information is transmitted to the client, increasing the transmission traffic and the transmission time.

According to one aspect of the present invention, a method for transmitting a network file is provided, comprising: a client sending to a server a network file request message carrying a first network file identifier, wherein the network file request message is used by the client to request to obtain current content in the network file from the server, and the first network file identifier is used for indicating content in the network file obtained by the client; the client receiving a differential file from the server, wherein the differential file stores the difference between the current content in the network file and the content in the network file obtained by the client; and the client combining the differential file with the content in the network file obtained by the client to obtain the current content in the network file.

Preferably, after the client sends to the server the network file request message carrying the first network file identifier, the method further comprises the client receiving a second network file identifier from the server, wherein the second network file identifier is used for indicating the current content in the network file.

Preferably, after the client receiving a second network file identifier from the server, the method further comprises if the client next requests to obtain a current content in the network file from the server, the client sends to the server a network file request message carrying the second network file identifier.

Preferably, after the client sends to the server the network file request message carrying the first network file identifier, the method further comprises: the server failing to find, in its cache, the content in the network file obtained by the client and indicated by the first network file identifier; and the server sending to the client the current content in the network file.

Preferably, after the client sends to the server the network file request message carrying the first network file identifier, the method further comprises: the server determining that a length of the current content in the network file is smaller than a length of the differential file; and the server sending to the client the current content in the network file.

Preferably, after the client sends to the server the network file request message carrying the first network file identifier, the method further comprises: the server determining that the current content in the network file is the same as the content in the network file obtained by the client; and the server sending to the client a network file response message carrying a cause value 304, wherein the cause value 304 is used for indicating that the current content in the network file is unchanged.

Preferably, the client receiving the differential file from the server comprises: the client receiving the differential file compressed by GZIP of HTTP standard from the server.

According to another aspect of the present invention, a system for transmitting a network file is provided, comprising a client and a server, wherein the client comprises: a first sending module configured to send to the server a network file request message carrying a first network file identifier, wherein the network file request message is used by the client to request to obtain current content in the network file from the server, and the first network file identifier is used for indicating the content in the network file obtained by the client; a first receiving module configured to receive a differential file from the server, wherein the differential file stores the difference between the current content in the network file and the content in the network file obtained by the client; and a combination module configured to combine the differential file with the content in the network file acquired by the client to obtain the current content in the network file.

Preferably, the client further comprises: a second receiving module configured to receive a second network file identifier from the server, wherein the second network file identifier is used for indicating the current content in the network file.

Preferably, the client further comprises: a second sending module configured to send to the server a network file request message carrying the second network file identifier if the second sending module next requests to obtain the current content in the network file from the server.

The server further comprises: a first determination module configured to determine that the content in the network file obtained by the client and indicated by the first network file identifier, is not found in a cache of the server; and a third sending module configured to send to the client the current content in the network file.

The server further comprises: a second determination module configured to determine that a length of the current content in the network file is smaller than a length of the differential file; and a fourth sending module configured to send to the client the current content in the network file.

In the present invention, by means of transmitting the differential file which stores the difference between the current content in the network file and the content in the network file obtained by the client, the problem of full-text transmission that much redundant information is transmitted to the client is solved, still yet the transmission traffic is reduced, and the transmission time is shortened.

**Brief Description of the Drawings**

Drawings, provided for further understanding of the present invention and forming a part of the specification, are used to explain the present invention together with embodiments of the present invention rather than to limit the present invention. In the drawings:

Fig. 1 is a flowchart of a method for transmitting a network file according to an embodiment of the present invention;
Fig. 2 is a basic principle schematic diagram according to an embodiment of the present invention;
Fig. 3 is a flowchart of a server processing a new request from a client according to an embodiment of the present invention;
Fig. 4 is a block diagram of the composition and structure of an addition identifier and a deletion identifier according to an embodiment of the present invention;
Fig. 5 is schematic diagram I of replacing the redundant content by an addition identifier and a deletion identifier according to a preferred embodiment I of the present invention;
Fig. 6 is schematic diagram II of replacing the redundant content by an addition identifier and a deletion identifier according to a preferred embodiment II of the present invention;
Fig. 7 is schematic diagram III of replacing the redundant content by an addition identifier and a deletion identifier according to a preferred embodiment III of the present invention;
Fig. 8 is a block diagram of the structure of a system for transmitting a network file according to an embodiment of the present invention;
Fig. 9 is structural block diagram I of a system for transmitting a network file according to a preferred embodiment of the present invention;
Fig. 10 is structural block diagram II of a system for transmitting a network file according to a preferred embodiment of the present invention;
Fig. 11 is structural block diagram III of a system for transmitting a network file according to a preferred embodiment of the present invention; and
Fig. 12 is structural block diagram IV of a system for transmitting a network file according to a preferred embodiment of the present invention.

**Detailed Description of the Embodiments**

Note that, the embodiments of the present invention and the features of the embodiments may be combined with each other if there is no conflict. The present invention is described below with reference to the accompanying drawings and embodiments in detail.

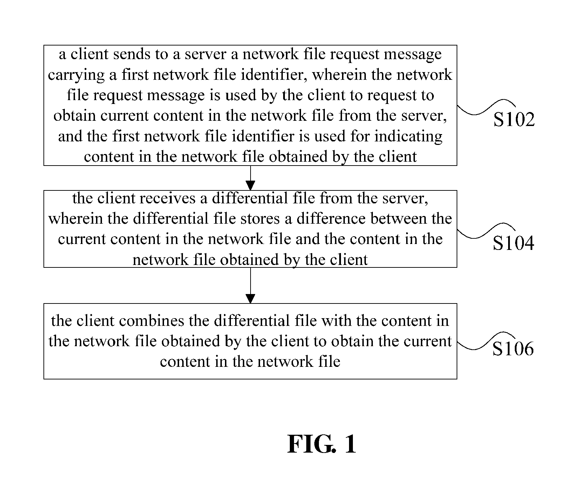

Provided in an embodiment of the present invention is a method for transmitting a network file. Fig. 1 is a flowchart of a method for transmitting a network file according to an embodiment of the present invention, comprising step S102 to step S106 as follows.

Step S102, a client sends to a server a network file request message carrying a first network file identifier, wherein the network file request message is used by the client to request to obtain current content in the network file from the server, and the first network file identifier is used for indicating content in the network file obtained by the client.

Step S104, the client receives a differential file from the server, wherein the differential file stores a difference between the current content in the network file and the content in the network file obtained by the client.

Step S106, the client combines the differential file with the content in the network file obtained by the client to obtain the current content in the network file.

In the related art, full-text transmission will result in much redundant information being transmitted to the client from the server, increasing the transmission traffic and the transmission time. In the embodiment of the present invention, only the differential file which stores the difference between the current content in the network file and the content in the network file obtained by the client is transmitted, enabling the transmission traffic to be reduced and the transmission time to be shortened.

Preferably, after the client sends to the server the network file request message carrying the first network file identifier, the method further comprises that the client receives a second network file identifier from the server, wherein the second network file identifier is used for indicating the current content in the network file. In the preferred embodiment, by the second network file identifier, it may be ensured that only the differential file is transmitted in the subsequent network file transmission, enabling the transmission traffic to be reduced and the transmission time to be shortened.

Preferably, after the client receives the second network file identifier from the server, the method further comprises that if the client next requests to obtain current content in the network file from the server, the client sends to the server a network file request message carrying the second network file identifier.

Preferably, after the client sends to the server the network file request message carrying the first network file identifier, the method further comprises: the server fails to find, in its cache, the content in the network file obtained by the client and indicated by the first network file identifier; and the server sends to the client the current content in the network file. In view that the server does not have the cache of the content in the network file indicated by the first network file identifier due to a long time, in the preferred embodiment, by means of directly sending to the client the current content in the network file, it may be ensured that the network file is transmitted properly and reliably.

Preferably, after the client sends to the server the network file request message carrying the first network file identifier, the method further comprises that the server determines that a length of the current content in the network file is smaller than a length of the differential file; and the server sends to the client the current content in the network file. In view that the length of the current content in the network file is smaller than that of the differential file, in the preferred embodiment resulted from the network file having changed too much, by means of directly sending to the client the current content in the network file with the smaller length, the transmission traffic may be reduced, and the transmission time may be shortened.

Preferably, after the client sends to the server the network file request message carrying the first network file identifier, the method further comprises that the server determines that the current content in the network file is the same as the content in the network file obtained by the client; and the server sends to the client a network file response message carrying a cause value 304, wherein the cause value 304 is used for indicating that the current content in the network file is unchanged. In view of the situation where the network file does not change for a long time, in the preferred embodiment, by means of directly sending to the client the cause value 304 (304 means Not Modified) of HTTP standard, the transmission traffic may be reduced, and the transmission time may be shortened.

Preferably, the client receiving the differential file from the server comprises: the client receives the differential file compressed by GZIP of HTTP standard from the server. In the preferred embodiment, by means of compressing the differential file by GZIP of HTTP standard and transmitting the differential file, the transmission traffic may be reduced, and the transmission time may be shortened.

In order to arrive at the above-mentioned objects, the technical solutions of the present invention are realized as follows:

the client requests a network file Content 1, which is corresponding to a certain URL: A, from the server, and the server sends the network file to the client, and informs the client of the file identifier Mark 1 of the network file at the same time.

After an interval, the client believes that the content in the network file corresponding to the URL: A might have changed, and then requests the server to send the new network file Content 2 corresponding to the same URL: A for a second time. In the request, the client informs the server of the previously obtained file identifier Mark 1. The server may learn that the client owns Content 1 according to Mark 1.

If the content in the network file corresponding to URL: A is still unchanged when the server receives the second request, the server responses the client with a cause value 304 of HTTP standard. The client will still carry Mark 1 when requesting the new network file corresponding to the URL: A next time.

If the content in the network file corresponding to the URL: A has changed into Content 2 when the second request is received, the server compares the difference between Content 2 and Content 1, generates a differential file Delta 1 and sends the differential file to the client, and informs the client of a file identifier Mark 2 corresponding to Content 2 at the same time. The client obtains the new file Content 2 according to Content 1 and Delta 1. The client will carry Mark 2 when requesting the new network file corresponding to the URL: A next time again. The above-mentioned process is repeated.

During transmission of the differential file Delta 1, it may still be transmitted by compressing with GZIP of HTTP standard. The difference lies only in that the object compressed by GZIP - the content in the HTTP text - is the differential file Delta 1, but not Content 2.

If the server receives Mark 1 but fails to find the content corresponding to the Content 1 (for example, the server does not have the cache of Content 1 because of having been a long time), then directly transmits Content 2 and Mark 2 to the client.

The implementation process of the embodiments of the present invention is described in details with reference to the embodiments below.

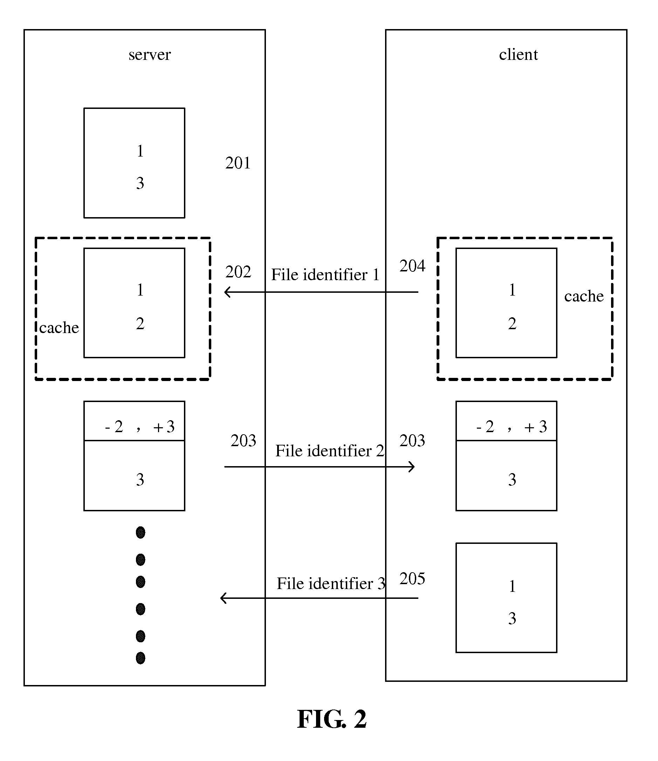

Fig. 2 is a basic principle schematic diagram according to an embodiment of the present invention. As shown in Fig. 2, 201 is the newest file in the server at present; 202 is an old file cached in the server; 204 is an old file cached in the client; and the contents in 202 and 204 are consistent. The client sends a file identifier Mark 1 of 204 to the server to request to obtain 201. The server finds 202 in its cache according to Mark 1 and compares 201 and 202 to generate a differential file 203, and then sends to the client 203 together with the file identifier Mark 2 of 201; the client combines into 205 according to 204 and 203, and the content in 205 is consistent with that in 201. In this way, the client obtains the newest file on the server. When a newest file is requested next time, the client will send Mark 2 to the server to allow the server to find the content in 201 in its cache for comparison; and the remaining flow is the same as previously mentioned.

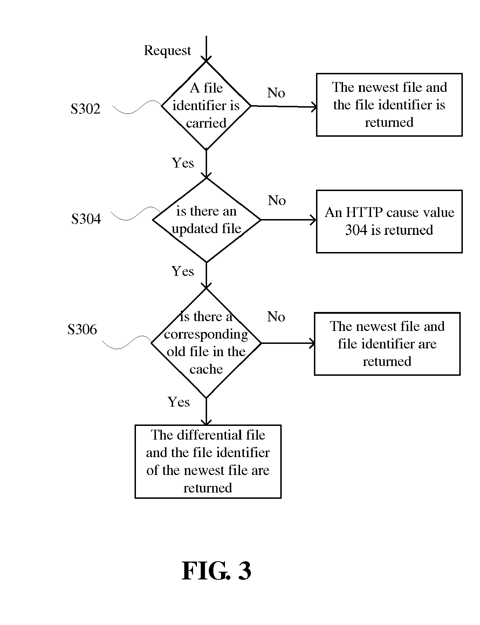

Fig. 3 is a flowchart of a server processing a new request from a client according to an embodiment of the present invention. As shown in Fig. 3, in a processing flow where a request received by the server does not carry a file identifier, the server will directly return the newest Content 1 and a file identifier Mark 1 of Content 1 to the client. This often happens when the client requests the network file corresponding to a certain URL from the server for the first time, comprising step S302 to step S306 as follows.

Step S302, when a request received by the server carries a file identifier Mark 1, and the newest file on the server is still Content 1, the server will return a cause value 304 of HTTP standard to the client.

Step S304, when a request received by the server carries a file identifier Mark 1, the newest file on the server has updated to Content 2, and the server may find content Content 1 corresponding to Mark 1 in the cache, (it needs to note that the server should maintain a cache "window" having a length of n, store n old files newest in time and file identifiers thereof in the "window", and take the file identifiers as keyword for the convenience of search.) the server will send to the client the differential file Delta 1 together with the file identifier Mark 2 of Content 2. However, if a length of the file Delta 1 is greater than a length of the file Content 2, the newest file Content 2 and relevant file identifier Mark 2 should be directly returned to the client.

Step S306, when a request received by the server carries a file identifier Mark 1, the newest file on the server has updated to Content 2, and the server may not find in the cache the content Content 1 corresponding to Mark 1, the server will directly return to the client the newest file Content 2 and a file identifier Mark 2 of Content 2.

The differential file is defined in such a way in the present invention: the UTF-8 code is used in the differential file in default, but any other appropriate code formats which are negotiated by the serving end and the client may be used in the differential file. UTF-8 code is used in default due to an universality consideration, but considering the requirement of reducing the storage space occupied by the file, other appropriate code format for a network file corresponding to a certain URL and a differential file thereof may be used, so as to minimize the storage space occupied thereby (the code formats may be negotiated in advance, or may also be assigned in the packet header of an HTTP GET request or in a parameter of a URL). For example, for a file in its content which there are a large amount of Chinese characters, it is more appropriate to agree to use GB 2312 code by both sides; that is because, one Chinese character occupies 3 bytes in UTF-8, but occupies only 2 bytes in GB 2312.

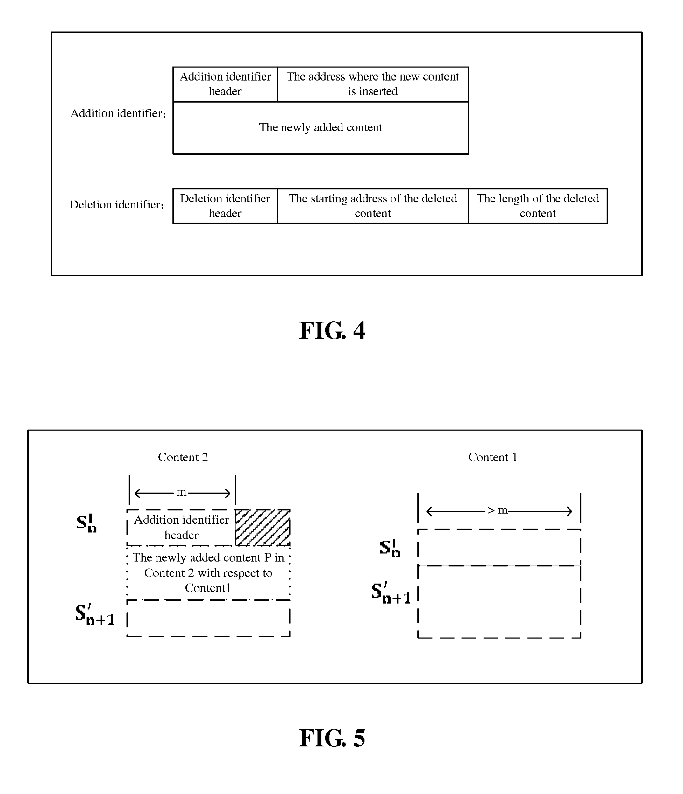

The differential file consists of two types of identifiers and parameters thereof. The two types of identifiers are respectively an addition identifier and a deletion identifier. As shown in Fig. 4, an address where the new content is inserted (counted by bytes) is written in the addition identifier, and the content which needs to be added is directly attached at the rear of the address. The starting address of the deleted content and the length of the deleted content are written in the deletion identifier (Both are counted by bits). The addition identifier and the deletion identifier may be defined in such a way: addition identifier = addition identifier header + the address where the new content is inserted + the newly-added content; and the deletion identifier = deletion identifier header + the starting address of the deleted content + the length of the deleted content. It needs to note that:

    a) the address where the new content is inserted and the starting address of the deleted content mentioned above are both in coordinate as the old file Content 1 corresponding to Mark 1.

    b) The present invention suggests that the identifiers do not use TLV structures, although the TLV structure has excellent performance in the aspect of parsing, the storage space occupied thereby is relatively great. The present invention suggests adopting the structure of a fixed length.

    c) If the coordinate in the addition identifier where the new content is inserted is 0, the new content is inserted at the starting position of Content 1, and the addition identifier may be left out. The content which needs to be added is directly placed at the starting position of the differential file, and the content which needs to be added is inserted starting from coordinate 0 in default when the differential file is parsed.

    d) If the deleted content indicated by the deletion identifier means all the content deleted starting from the starting position in the deletion identifier to the file end of the Content 1, the length of the deleted content may be left out in the deletion identifier, but the deletion identifier must be placed at the end of the differential file. In this way, all the content from the starting address in the deletion identifier to the file end of the Content 1 are entirely deleted in default when the differential file is parsed. If what is indicated by the deletion identifier is to entirely delete all the content in Content 1, the starting address (because the starting address is 0) and the length of the deleted content may also be left out in the deletion identifier, remaining only a deletion identifier header, but the deletion identifier must be placed at the end of the differential file.

    e) The addition identifier and the deletion identifier both start with non-text codes that are impossible to appear in a plaintext file, among the code formats, to distinguish from ordinary contents, for example, "25 EM" (end of medium) in American Standard Code for Information Interchange (ASCII for short) may be used as the addition header, and "24 CAN cancel" may be used as the deletion header. When the differential file is parsed, it is learnt that it is an addition identifier when 25 is read, and it is learnt that it is a deletion identifier when 24 is read.

f) The design of the differential algorithm is as follows:

it is assumed that a length of the addition identifier is m bytes (the number of the bytes of the newly-added content at the rear of the addition identifier is not included), and a length of the deletion identifier is n bytes. An old file is Content 1, and a new file is Content 2. Content 1 and Content 2 are scanned to find the sub-strings $S_1^l$, $S_2^l$, ... with the same content (the text comparison algorithm for finding the sub-strings $S_1^l$, $S_2^l$, ... does not belong to the category of the present invention, it is suggested to use an algorithm that is commonly used at present, for example, the algorithm proposed by M.D. McIlroy in *An Algorithm for Differential File Comparison*). The present invention is to select $S_1$, $S_2$, ...$S_N$ ($N<=N^l$) appropriate for carrying out the differential operation of present invention from $S_1^l$, $S_2^l$, ..., i.e. to find the redundant strings that may be left out from Content 2 and do not need to be transmitted to the client again.

We define that $S_1$, which is a first sub-string appropriate for differential operation among $S_1^l$, $S_2^l$, ..., will be found from $S_1^l$, $S_2^l$, ... according to the following method of (I). It is assumed that $S_n^l$ is a certain string among $S_1^l$, $S_2^l$, ..., and $|S_n^l|$ represents the string length of $S_n^l$ (counted by bytes).

(I) As long as $S_n^l$ meets any one of the following three conditions, it is the $S_1$ we want to find.

According to the difference of the content between $S_n^l$ and $S_{n+1}^{'}$ in Content 1 and Content 2, the three different conditions as shown in the following embodiments I to III exist.

Embodiment I

Fig. 5 is schematic diagram I of replacing the redundant content by an addition identifier and a deletion identifier according to a preferred embodiment I of the present invention. As shown in Fig. 5, content P is newly added between $S_n^l$ and $S_{n+1}^{'}$ in Content 2 (file 2), and no content is between $S_n^l$ and $S_{n+1}^{'}$ in Content 1 (file 1).
In this situation, P should be added, but we may use an addition identifier to indicate that an insertion operation should be carried out at the rear of $S_n^l$ only if $|S_n^l|>m$, or it is not cost-effective, and the $S_n^l$ will not be the $S_1$ we want to find.

The dash boxes in Fig. 5 represent $S_n^l$ and $S_{n+1}^{'}$, and the dash-dot box represents the newly added content P in Content 2 with respect to Content 1; and the shaded block represents the storage space saved by the differential file with respect to Content 2 when the addition identifier is used.

Embodiment II

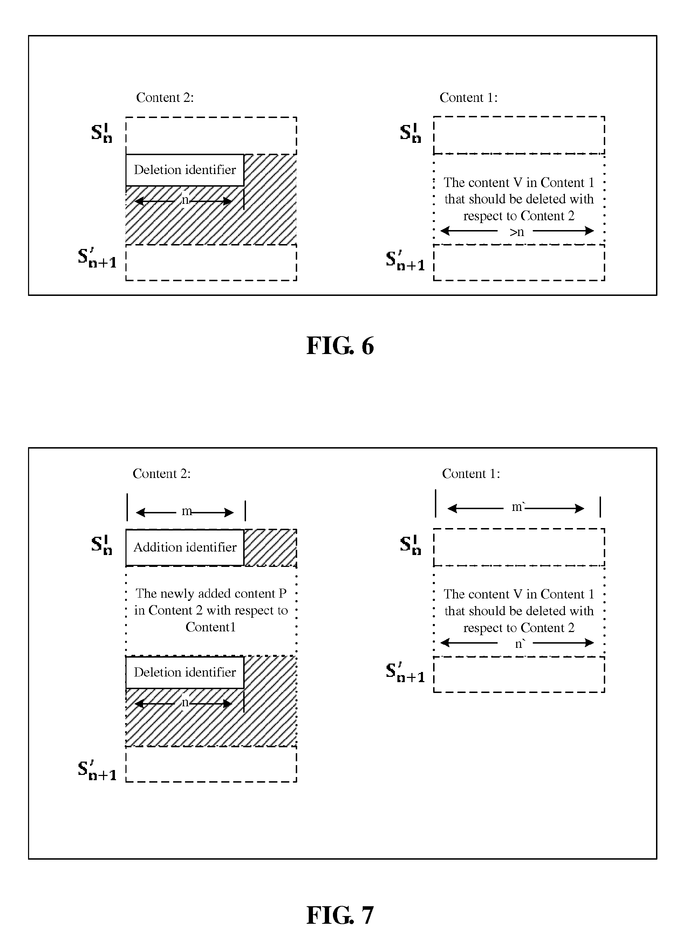

Fig. 6 is schematic diagram II of replacing the redundant content by an addition identifier and a deletion identifier according to a preferred embodiment II of the present invention. As shown in Fig. 6, no content is between $S_n^l$ and $S_{n+1}^{'}$ in Content 2, and content V is between $S_n^l$ and $S_{n+1}^{'}$ in Content 1.
In this situation, V needs to be deleted. We may use a deletion identifier to indicate that a deletion operation should be carried out at the rear of $S_n^l$ only if $|V| > n$. Or it is not cost-effective, and the $S_n^l$ will not be the $S_1$ we want to find.

The dash boxes in Fig. 6 represent $S_n^l$ and $S_{n+1}^{'}$, and the dash-dot box represents the content V that should be deleted in Content 2 with respect to Content 1; and the shaded solid block represents the storage space saved by the differential file with respect to Content 2 when the deletion identifier is used.

Embodiment III

Fig. 7 is schematic diagram III of replacing the redundant content by an addition identifier and a deletion identifier according to a preferred embodiment III of the present invention. As shown in Fig. 7, content P is newly added in Content 2 between $S_n^l$ and $S_{n+1}'$, and content V is between $S_n^l$ and $S_{n+1}'$ in Content 1.

This situation is the mixture situation of the preferred embodiment I and the preferred embodiment II. as long as $(\,|S_n^l|\,+\,|V|)\,>(m+n)$, the preferred embodiment III may be used. An addition identifier is used to indicate that an insertion operation should be carried out at the rear of $S_n^l$, then a deletion identifier is used to indicate that a deletion operation should be carried out at the rear of $S_n^l$. If the above-mentioned requirement is not met, the replacement is not cost-effective, and the $S_n^l$ will not be the $S_1$ we want to find. It needs to note that the $S_n^l$ not meeting the above-mentioned three conditions is given up, and the search of $S_1$ meeting the requirement will continue.

(II), the following steps should be carried out if $S_1$ satisfying (I) may not be found:

Content 2 is directly placed at the starting position of the differential file, and the addition identifier is left out.

The previous description in c) is referred: the content which needs to be added is directly placed at the starting position of the differential file, and the content which needs to be added is inserted starting from coordinate 0 in default when the differential file is parsed.

Then a deletion identifier is used to indicate that Content 1 should be deleted.

The previous description in d) is referred: if what is indicated by the deletion identifier is to entirely delete all the content in Content 1, a starting address (because the starting address is 0) and a length of the deleted content may be left out in the deletion identifier, remaining only a deletion identifier header, but the deletion identifier must be placed at the end of the differential file.

It should be noted that, in this way, the generated differential file is only one byte more compared to Content 2 (i.e. the byte occupied by the deletion identifier header).

(III), If the $S_1$ satisfying (I) is found, there are three situations because $S_1$ is the first string with the same content:

if content P is before $S_1$ in Content 2, and no content is before $S_1$ in Content 1, then P is directly placed at the starting position of the differential file, and the addition identifier is left out. In this way, no redundant byte is added;

if no content is before $S_1$ in Content 2, and content V is before $S_1$ in Content 1; then a deletion identifier is used to indicate that V should be deleted. In this way, redundant bytes might be added in extreme cases, but the redundant bytes will not be more than (n - 1) (when V has only one byte);

if content P is before $S_1$ in Content 2, and content V is before $S_1$ in Content 1, then P is directly placed at the starting position of the differential file, the addition identifier is left out. A deletion identifier is used to indicate that V should be deleted. In this way, redundant bits might be added in extreme cases, but the redundant bytes will not be more than (n - 1).

(IV), The nth segment of $S_n$ (n >= 2) meeting the requirements of (I) is searched. Because it is the nth segment, there is no need to consider the circumstances before $S_n$ but only the circumstances thereafter, and the processing is the same as (I). When $S_n$ is found, an corresponding addition/deletion identifier should be updated, because the length of the content that should be added and deleted at the rear may be determined until now.

(V), If $S_n$ is the last string meeting the requirements of (I), and if a deletion identifier should be used after $S_n$, according to the previous description in d): the length of the deleted content may be left out in the deletion identifier. However, the deletion identifier must be placed at the end of the differential file.

In non-extreme cases, the differential file generated according to the above-mentioned algorithm occupies less storage space with respect to Content 2. In extreme cases, there may be at most (n - 1) bytes redundant in the differential file with respect to Content 2.

Examples

The following is an example for realizing the present invention, the processing objects of this example are mainly XML files/JSON files, etc. transmitted through networks (these file formats are generally used for representing the results obtained by invoking network APIs, for example the network APIs of microblog, group purchase websites, etc., so this example has practical values):

the differential file has the following features:

(1) it is agreed that the differential file in this example uses UTF-8 code in default, but may change to use any other appropriate code formats with being negotiated by the serving end and the client.

(2) There are 2 kinds of addition identifiers and 3 kinds of deletion identifiers defined in total in this example.

(3) It is defined that the first kind of addition identifier uses 25 EM (25 EM is a control character in ASCII characters, but the representation of an ASCII character in UTF-8 code is the same as that in the ASCII character table) in UTF-8 code as the addition identifier header. The address where the new content is inserted following the addition identifier starting with 25 EM is represented by 2 bytes.

(4) It is defined that the second kind of addition identifier uses 19 DC3 (device control 3) as the addition identifier header, and the address where the new content is inserted following the addition identifier starting with 19 DC3 is represented by 3 bytes.

(5) It is defined that the first kind of deletion identifier uses 24 CAN (cancel) as the deletion identifier header. The starting address of the deleted content following the deletion identifier starting with 24CAN is represented by 2 bytes, and the length of the deleted content is represented by 2 bytes.

(6) It is defined that the second deletion identifier uses 18 DC2 (device control 2) as the deletion identifier header. However, the starting address of the deleted content following the deletion identifier starting with 18 is represented by 3 bytes, and the length of the deleted content is represented by 3 bytes.

(7) It is defined that the third deletion identifier uses 17 DC1 (device control 1) as the deletion identifier header. However, the starting address of the deleted content following the deletion identifier starting with 17 is represented by 3 bytes, and the length of the deleted content is represented by 2 bytes.

In summary, when the length of the old file Content 1 as the coordinate does not exceed 64K, the addition identifier defined in (3) and the deletion identifier defined in (5) are used. When the length of Content 1 is more than 64K and is less than 16M, the addition identifier defined in (4) and the deletion identifier defined in (6) and (7) are used (selecting to use the deletion identifier defined in (6)/(7) depending on whether the length of the deleted content exceeds 64K or not).
The file identifier has the following features:

In this example, the CRC 16 check code of the network file is used as the file identifier thereof. The file identifier Mark 1 of the old file Content 1 transmitted to the server by the client may be obtained by either of the following two methods:

the server generates and transmits the file identifier to the client. For example, the server calculates out the file identifier Mark 1 when generating Content 1, and transmits the file identifier to the client by attaching the file identifier in the packet header replied by HTTP GET (or in the replied text).

The server and the client calculate out the same file identifier using the same algorithm. For example, the server calculates out the file identifier Mark 1 when generating Content 1, but does not transmit the file identifier to the client. The client and the server may calculate out the same file identifier Mark 1 according to the content in the received network file Content 1, because the same CRC 16 algorithm is used.
The server cache "window" has the following features:

in this example, the server individually maintains a cache "window" having a length of n for the network file corresponding to each URL, and saves n old files and file identifiers thereof newest in time in the "windows", with the file identifiers taken as keywords. When the "window" is full, it "slides" in the direction newest in time (i.e. abandoning the oldest file and placing in the newest file with the strategy of first in first out). After the server receives a file identifier of the old file carried in a packet header (or the parameter of the URL) requested via HTTP GET by the client, the old file cached in the "window" is searched with the keyword being the file identifier.

Other processing that should be noted includes: the server should compare the sizes of the following files: the generated differential file Delta 1; the newest network file Content 2; the file that Delta 1 is compressed by GZIP; and the file that Content 2 is compressed by GZIP. The smallest one is selected and sent to the client after comparison, and it is explained in the packet header replied by HTTP (it may be explained using the Content-Encoding field used by GZIP in the replied packet header). The client learns which one of the 4 files is received by itself according to the explanation in the packet header.
If the content in the network file Content 2 corresponding to a certain URL is mainly made up of Chinese characters, the code format of the network file and the differential file thereof transmitted via the URL may be agreed to be GB 2312.

It should be noted that although the code format has changed, since the representation of ASCII characters in GB 2312 code is the same as the representation of ASCII characters in the ASCII character table, the header in the addition/deletion identifier still uses characters such as 25 EM and so on.

Similarly, if UTF-8 code may not ensure that the differential file occupies the least storage space, a code format that may enable the differential file to occupy less storage space will be selected in this example.

It should be noted that the steps shown in the flowchart of the drawings may be executed, for example, in a computer system with a set of computer-executable instructions, in addition, a logic order is shown in the flowchart, but the shown or described steps may be executed in a different order under some conditions.

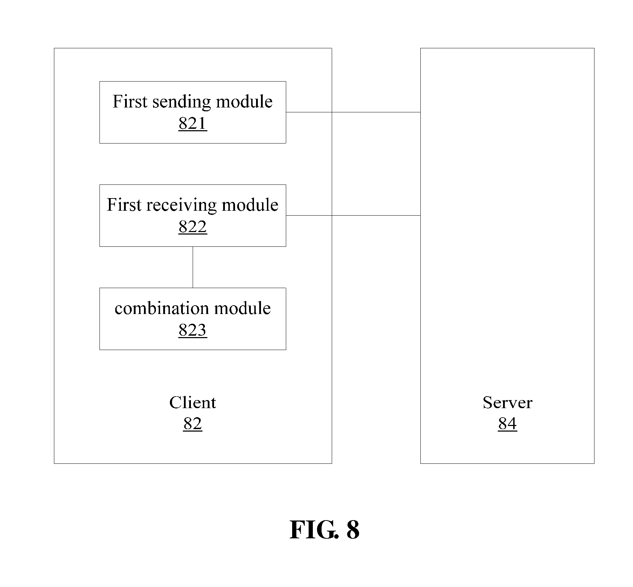

An embodiment of the present invention also provides a system for transmitting a network file, and the system may be used to realize the above-mentioned method for transmitting a network file. Fig. 8 is a structural block diagram of a system for transmitting a network file according to an embodiment of the present invention. As shown in Fig. 8, a client **82** and a server **84** is comprised, wherein the client **82** comprises a first sending module **821,** a first receiving module **822** and a combination module **823**. The structure is described in detail below.

The first sending module **821** is configured to send to the server **84** a network file request message carrying a first network file identifier, wherein the network file request message is used by the client **82** to request to obtain current content in the network file from the server **84,** and the first network file identifier is used for indicating content in the network file obtained by the client **82;** the first receiving module **822** is configured to receive a differential file from the server **84,** wherein the differential file stores the difference between the current content in the network file and the content in the network file obtained by the client **82;** and a combination module **823,** which is connected to the first receiving module **822,** is configured to combine the differential file with the content in the network file obtained by the client **82** to obtain the current content in the network file.

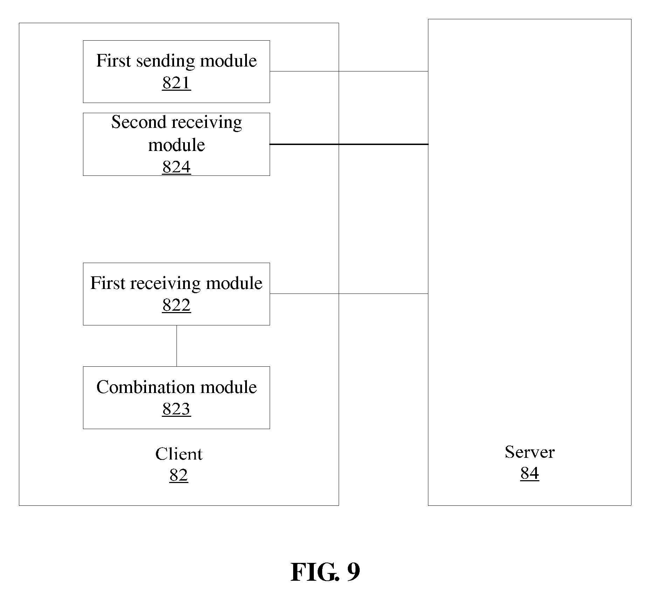

Fig. 9 is structural block diagram I of a system for transmitting a network file according to a preferred embodiment of the present invention. As shown in Fig. 9, the client **82** further comprises: a second receiving module **824** configured to receive a second network file identifier from the server **84,** wherein the second network file identifier is used for indicating the current content in the network file.

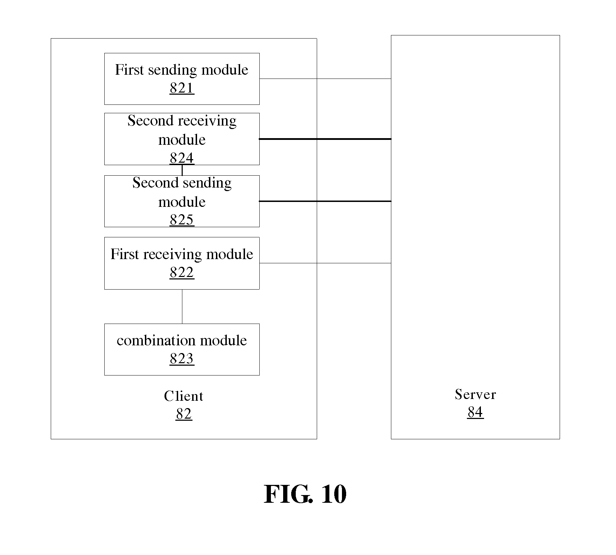

Fig. 10 is structural block diagram II of a system for transmitting a network file according to a preferred embodiment of the present invention. As shown in Fig. 10, preferably, the client **82** further comprises: a second sending module **825,** connected to the second receiving module **824,** and configured to send to the server **84** a network file request message carrying the second network file identifier if the second sending module **825** next requests to obtain the current content in the network file from the server **84**.

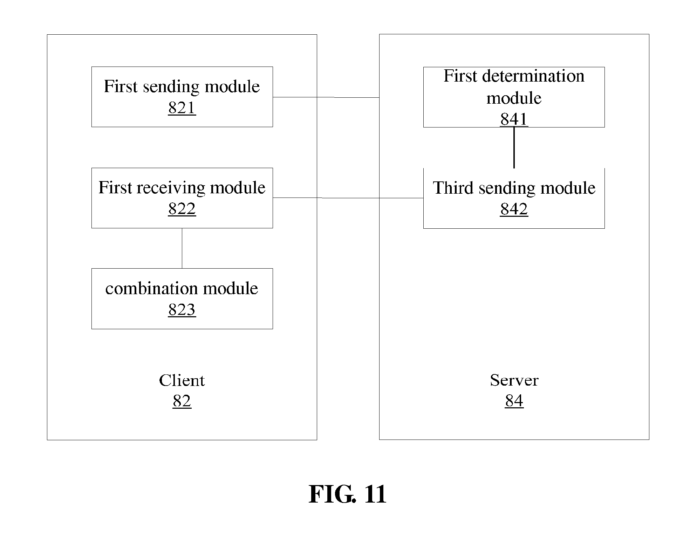

Fig. 11 is structural block diagram III of a system for transmitting a network file according to a preferred embodiment of the present invention. As shown in Fig. 11, the server **84** further comprises: a first determination module **841** configured to determine that the content in the network file obtained by the client and indicated by the first network file identifier is not found in a cache of the server 84; and a third sending module **842,** connected to the first determination module **841,** configured to send to the client **82** the current content in the network file.

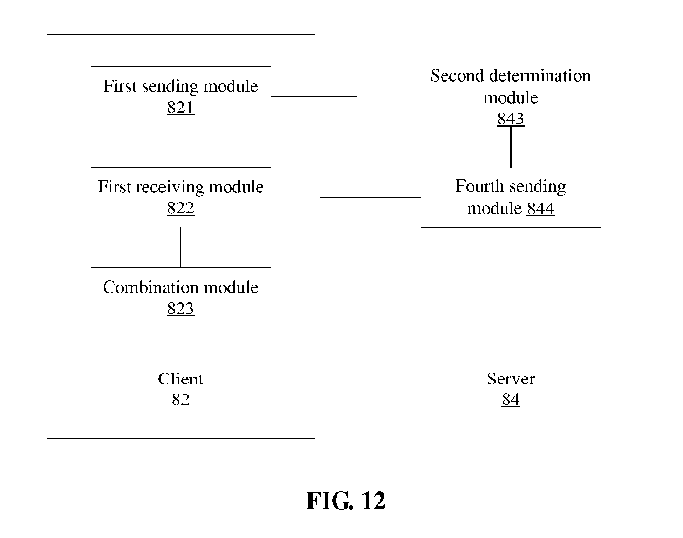

Fig. 12 is structural block diagram IV of a system for transmitting a network file according to a preferred embodiment of the present invention. As shown in Fig. 12, the server **84** further comprises: a second determination module **843** configured to determine that a length of the current content in the network file is smaller than a length of the differential file; and a fourth sending module **844,** connected to the second determination module **843,** and configured to send to the client **82** the current content in the network file.

It should be noted that the system for transmitting a network file described in the device embodiments corresponds to the above-mentioned method embodiments, with the specific implementation described in the method embodiments in detail, which will not be described here again.

In summary, according to the above-mentioned embodiments of the present invention, a method and system for transmitting a network file are provided, wherein the method comprises: a client sends to a server a network file request message carrying a first network file identifier, wherein the network file request message is used by the client to request to obtain current content in the network file from the server, and the first network file identifier is used for indicating the content in the network file obtained by the client; the client receives a differential file from the server, wherein the differential file stores the difference between the current content in the network file and the content in the network file obtained by the client; and the client combines the differential file with the content in the network file obtained by the client to obtain the current content in the network file. In the present invention, by means of transmitting the differential file which stores the difference between the current content in the network file and the content in the network file obtained by the client, the problem of full-text transmission that much redundant information is transmitted to the client is solved, still yet the transmission traffic is reduced, and the transmission time is shortened.

Obviously, those skilled in the art should know that each of the mentioned modules or steps of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device, or may be independently manufactured as each integrated circuit module, or multiple modules or steps thereof may be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

**Claims**

1. A method for transmitting a network file, **characterized by** comprising:

   sending, by a client, to a server a network file request message carrying a first network file identifier, wherein the network file request message is used by the client to request to obtain current content in the network file from the server, and the first network file identifier is used for indicating content in the network file obtained by the client;
   receiving, by the client, a differential file from the server, wherein the differential file stores a difference between the current content in the network file and the content in the network file obtained by the client; and
   combining, by the client, the differential file with the content in the network file obtained by the client to obtain the current content in the network file.

2. The method according to claim 1, **characterized in that** after sending, by a client, to the server the network file request message carrying the first network file identifier, the method further comprises: receiving, by the client, a second network file identifier from the server, wherein the second network file identifier is used for indicating the current content in the network file.

3. The method according to claim 2, **characterized in that** after receiving, by the client, the second network file identifier from the server, the method further comprises: if the client next requests to obtain current content in the network file from the server, sending, by the client, to the server a network file request message carrying the second network file identifier.

4. The method according to claim 1, **characterized in that** after sending, by the client, to the server the network file request message carrying the first network file identifier, the method further comprises:

   failing to find by the server, in a cache of the server, the content in the network file obtained by the client and indicated by the first network file identifier; and
   sending, by the server, to the client the current content in the network file.

5. The method according to claim 1, **characterized in that** after sending, by the client, to the server the network file request message carrying the first network file identifier, the method further comprises:

   determining, by the server, that a length of the current content in the network file is smaller than a length of the differential file; and
   sending, by the server, to the client the current content in the network file.

6. The method according to claim 1, **characterized in that** after sending, by the client, to the server the network file request message carrying the first network file identifier, the method further comprises:

   determining, by the server, that the current content in the network file is the same as the content in the network file obtained by the client; and
   sending, by the server, to the client a network file response message carrying a cause value 304, wherein the cause value 304 is used for indicating that the current content in the network file is unchanged.

7. The method according to any one of claims 1 to 6, **characterized in that** receiving, by the client, the differential file from the server comprises: the client receiving the differential file compressed by GZIP of HTTP standard from the server.

8. A system for transmitting a network file, **characterized by** comprising a client and a server, wherein the client comprises:

   a first sending module configured to send to the server a network file request message carrying a first network file identifier, wherein the network file request message is used by the client to request to obtain current content in the network file from the server, and the first network file identifier is used for indicating the content in the network file obtained by the client;
   a first receiving module configured to receive a differential file from the server, wherein the differential file stores a difference between the current content in the network file and the content in the network file obtained by the client; and a combination module configured to combine the differential file with the content in the network file obtained by the client to obtain the current content in the network file.

9. The system according to claim 8, **characterized in that** the client further comprises: a second receiving module configured to receive a second network file identifier from the server, wherein the second network file identifier is used for indicating the current content in the network file.

10. The system according to claim 9, **characterized in that** the client further comprises: a second sending module configured to send to the server a network file request message carrying the second network file identifier if the second sending module next requests to obtain current content in the network file from the server.

a client sends to a server a network file request message
carrying a first network file identifier, wherein the network
file request message is used by the client to request to
obtain current content in the network file from the server,
and the first network file identifier is used for indicating
content in the network file obtained by the client

S102

the client receives a differential file from the server,
wherein the differential file stores a difference between the
current content in the network file and the content in the
network file obtained by the client

S104

the client combines the differential file with the content in
the network file obtained by the client to obtain the current
content in the network file

S106

# FIG. 1

**FIG. 2**

```
                                Request

                                   │
                                   ▼
                          ◇ A file ◇         No      ┌─────────────────────┐
    S302      ~~~        ◇ identifier is ◇ ─────────► │ The newest file and  │
                         ◇  carried  ◇               │ the file identifier is│
                          ◇       ◇                   │      returned        │
                                   │                  └─────────────────────┘
                                  Yes
                                   │
                                   ▼
                                ◇     ◇        No      ┌─────────────────────┐
    S304      ~~~            ◇ is there an ◇ ─────────► │ An HTTP cause value  │
                            ◇ updated file ◇          │   304 is returned    │
                                ◇     ◇                └─────────────────────┘
                                   │
                                  Yes
                                   │
                                   ▼
                              ◇ is there a ◇    No     ┌─────────────────────┐
    S306      ~~~          ◇ corresponding ◇ ────────► │ The newest file and  │
                          ◇ old file in the ◇         │  file identifier are │
                              ◇  cache  ◇             │      returned        │
                                   │                  └─────────────────────┘
                                  Yes
                                   │
                                   ▼
                    ┌─────────────────────────┐
                    │  The differential file  │
                    │  and the file identifier│
                    │  of the newest file are │
                    │        returned         │
                    └─────────────────────────┘
```

# FIG. 3

Addition identifier:

| Addition identifier header | The address where the new content is inserted |
| --- | --- |
| The newly added content | |

Deletion identifier:

| Deletion identifier header | The starting address of the deleted content | The length of the deleted content |
| --- | --- | --- |

**FIG. 4**

Content 2

$S_n^1$

| Addition identifier header | ///// |
| --- | --- |

The newly added content P in Content 2 with respect to Content1

$S_{n+1}'$

Content 1

$S_n^1$

$S_{n+1}'$

**FIG. 5**

**FIG. 6**

**FIG. 7**

First sending module
821

First receiving module
822

combination module
823

Client
82

Server
84

**FIG. 8**

First sending module
821

Second receiving
module
824

First receiving module
822

Combination module
823

Client
82

Server
84

**FIG. 9**

First sending module
821

Second receiving
module
824

Second sending
module
825

First receiving module
822

combination module
823

Client
82

Server
84

FIG. 10

First sending module
821

First receiving module
822

combination module
823

Client
82

First determination
module
841

Third sending module
842

Server
84

**FIG. 11**

First sending module
821

Second determination
module
843

First receiving module
822

Fourth sending
module 844

Combination module
823

Client
82

Server
84

**FIG. 12**

# INTERNATIONAL SEARCH REPORT

| International application No. |
| --- |
| PCT/CN2012/072392 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: G06F; H04L; H04W; H04Q

Documentation searched other than minimum documentation to the extent that such documents are included in the fields searched

Electronic data base consulted during the international search (name of data base and, where practicable, search terms used)

CNABS, CNKI, SIPOABS: differen+, +delta+, file?, (last or current or old) 2w (version or identi+)

### C. DOCUMENTS CONSIDERED TO BE RELEVANT

| Category* | Citation of document, with indication, where appropriate, of the relevant passages | Relevant to claim No. |
| --- | --- | --- |
| X | CN 101944032 A (HUAWEI TECHNOLOGIES CO LTD) 12 January 2011 (12.01.2011) description, paragraphs 0055-0109, 0246-0250 | 1-10 |
| X | US 2005010576 A1 (REN LIWEI, et al.) 13 January 2005 (13.01.2005) abstract | 1-10 |
| X | US 6148340 A (INT BUSINESS MACHINES CORP.) 14 November 2000 (14.11.2000) abstract | 1-10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 August 2012 (20.08.2012) | 13 September 2012 (13.09.2012) |

| Name and mailing address of the ISA State Intellectual Property Office of the P. R. China No. 6, Xitucheng Road, Jimenqiao Haidian District, Beijing 100088, China Facsimile No. (86-10)62019451 | Authorized officer YIN, Peng Telephone No. (86-10)62412180 |
| --- | --- |

Form PCT/ISA/210 (second sheet) (July 2009)

## INTERNATIONAL SEARCH REPORT
Information on patent family members

| International application No. |
| --- |
| PCT/CN2012/072392 |

| Patent Documents referred in the Report | Publication Date | Patent Family | Publication Date |
| --- | --- | --- | --- |
| CN 101944032 A | 12.01.2011 | None | |
| US 2005010576 A1 | 13.01.2005 | None | |
| US 6148340 A | 14.11.2000 | None | |

Form PCT/ISA /210 (patent family annex) (July 2009)

**INTERNATIONAL SEARCH REPORT**

International application No.

PCT/CN2012/072392s

CONTINUE OF A. CLASSIFICATION OF SUBJECT MATTER
H04L 29/06 (2006.01) i
H04L 29/08 (2006.01) i
G06F 9/445 (2006.01) i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2312 A